# EUROPEAN PATENT SPECIFICATION

(11) **EP 1 493 769 B1**
(45) Date of publication and mention of the grant of the patent: **21.11.2007**
(21) Application number: 03380158.0
(22) Date of filing: 30.06.2003
(51) Int. Cl.: C08G 65/30, C08G 65/26, C07C 41/03, B01J 21/20, C07C 41/36, C07C 43/11

(54) **Process to purify polyether polyols**
Verfahren zur Reinigung von Polyetherpolyolen
Procédé pour épuration des polyetherpolyoles

(43) Date of publication of application: 05.01.2005
(73) Proprietor: REPSOL QUIMICA S.A., E-28046 Madrid (ES)
(72) Inventor: Montalbo Barroso, Beatriz, 28914 Leganes Madrid (ES); Malaga Mellado, Mariano, 28012 Madrid (ES)
(74) Representative: Garcia-Cabrerizo y del Santo, Pedro Maria

(56) References cited:
- EP-A- 0 926 183
- EP-A- 1 338 618
- US-A- 4 122 035
- US-A- 4 306 943
- US-A- 4 507 475
- PATENT ABSTRACTS OF JAPAN vol. 005, no. 120 (C-065), 4 August 1981 (1981-08-04) & JP 56 057730 A (DAI ICHI KOGYO SEIYAKU CO LTD), 20 May 1981 (1981-05-20)

## Description

### FIELD OF THE INVENTION

The invention relates to a process to purify polyether polyols by means of catalysis with double metal cyanide catalysts, based on the use of microfiltration or ultrafiltration techniques, to obtain a substantially pure polyether polyol, with a low catalytic residue content.

### BACKGROUND OF THE INVENTION

Double metal cyanides (DMC) can be used as catalysts (DMC catalysts) for reactions of alkene oxide polyaddition to substances that contain active hydrogens (see, e.g. the North American patents US 3,404,109, US 3,941,849 and US 5,158,922). The use of these DMC catalysts in the production of polyether polyols (products resulting from the addition of alkylene oxides to a compound containing active hydrogens) permits reducing the content of monofunctional polyether polyols with a terminal double bond, in comparison with those polyether polyols produced by polyether polyol production processes using conventional alkaline catalysts, such as potassium hydroxide. The polyether polyols thus produced can be later used in the production of polyurethanes with improved properties for their use as elastomers, adhesives, coatings and foams.

DMC catalysts are usually produced by the treatment of aqueous solutions of metal salts with aqueous solutions of metal cyanide salts in the presence of organic ligands with low molecular weight, e.g. ethers. A typical preparation process of DMC catalysts (EP 700 949) consists of mixing an aqueous solution of zinc chloride (in excess) with an aqueous solution of potassium hexacyanocobaltate and with dimethoxyethane (diglyme) to form a suspension; the solid catalyst is then separated by filtering and washing it with an aqueous solution of diglyme, thus producing active DMC catalysts with general formula Zn₃[Co(CN)₆]₂.xZnCl₂.yH₂O.zDiglyme. EP 700 949, WO 97/40086 and WO 98/16310 disclose improved DMC catalysts with high activity and which permit the production of polyether polyols with low concentrations of catalytic residues, e.g. 20-25 p.p.m, (WO 98/16310, Table 1). WO 99/19063 discloses crystalline double metal cyanides, useful as high activity catalysts to produce polyether polyols. The patent US 5,844,070 discloses a rapid activation process for DMC catalysts.

DMC catalysts have, in general, high catalytic activity, which permits using them in low concentrations. Nevertheless it is necessary to eliminate, as far as possible, the DMC catalyst residues of the polyether polyol produced to avoid subsequent, unwanted secondary reactions, e.g. when the polyether polyol is made to react with isocyanate to obtain polyurethanes, or. e.g. to avoid unwanted volatile products from forming during their storage.

Conventional methods to eliminate catalytic residues, such as aqueous extraction or absorption with magnesium silicate, are ineffective at eliminating DMC catalyst residues from polyether polyols (see, e.g. the patents US 4,355,188, US 4,721,818, US 4,877,906, US 4,987,271, US 5,010,047, EP 385 619, US 5,099,075, US 5,144,093, US 5,248,833, US 5,416,241, US 5,416,241 and US 5,973,096). In general although these processes are effective for the elimination of the DMC catalyst residues, they require the use of additional reagents and relatively complicated operations. US patent 4,355,188 thus discloses a process to eliminate said DMC catalyst residues which consists of treating the crude polyether polyol with a strong base such as an alkaline metal hydroxide or an alkaline metal dispersion and passing the treated polyether polyol through an anion exchange resin. The patent US 4,721,818 proposes a treatment for polyether polyols with an alkaline metal hydride to transform a soluble catalyst into an insoluble specie that can be eliminated through filtration. US patent 5,099,075 discloses the use of an effective quantity of an oxidant to transform the catalytic residues in insoluble species that can be separated.

Furthermore, the patent US 4,483,054 proposes the preparation of filterable DMC catalysts suitable for the polymerization of propylene oxide. For this, the reaction of zinc chloride and potassium hexacyanocobaltate is carried out in water-diglyme in the presence of an inert filter-aid. Alumina, silica gel, aluminium silicate, magnesium silicate, diatomaceous earth, perlite, carbon black, carbon, etc., are stated as inert filter aids.

"There are many documents disclosing the purification of polyether polyols as EP-A-0926183, US-A-4507475, US-A-4306943, JP56057730 or US-A-4122035, by elimination of residues of alkaline catalysts instead of DMC catalyst and requiring the use of additional reagents. The different nature and behaviour in the reaction crude of both types of catalysts (alkaline-DMC) makes it necessary to find a new process for the purification of crude polyether polyols not suggested in the teachings of said documents.

Document EP-A-1338618 discloses a process for producing high purity low odour polyether polyols with low catalytic residues through a polyaddition of alkylene oxides to substances containing active hydrogen atoms in the presence of double metal cyanides (DMC) catalysts characterized by the use of sepiolite either in the reaction step or in a purification step which further eliminate other impurities. DMC catalyst is not directly eliminated but it is eliminated by simple filtration of sepiolite.

Despite the fact that various processes exist to eliminate DMC catalyst residues from polyether polyols, there continues to exist the need to provide an alternative process to eliminate said residues that do not require the use of additional reagents or complicated operations. Surprisingly, it has now been discovered that the DMC catalyst residues can be eliminated from the crude polyether polyol using selective separation-concentration techniques based on microfiltration or ultrafiltration technology using membranes that separate on the basis of size exclusion.

Ultrafiltration and microfiltration are membrane separation processes (barrier that separates two phases and limits the passage of chemical species in a specific way) based on size exclusion and whose controlling driving force is pressure difference. The types of flow existing in the processes driven by pressure difference can be through-flow (that most used in microfiltration) and cross-flow (that most used in ultrafiltration). In general, a membrane separation process consists of the rejection of one or more components present in a liquid mixture (solution) by applying a driving force. The solution is forced to cross the membrane attaining the separation of the components in accordance with their size. The fraction that crosses the membrane is known by the name "filtrate" or permeate", whilst the fraction retained is called "reject" or "retentate" and contains, in general, molecules of a larger size than the membrane pore diameter which are retained in the membrane. The membranes are characterized by their pore size; nevertheless, as it is a very complicated measure to perform, the most common way of characterizing membranes is called their "cut-off". This number relates to the molecule size, in daltons (Da) on in microns (µm), of species for which a retention percentage (percentage of solute which does not cross the membrane) of, at least, 90% is expected. The membranes can be classified in accordance with their different characteristics in simples and compounds; symmetrical or asymmetrical; bipolar, neutral or charged (positively or negatively); polymeric or ceramic. For more information on microfiltration and ultrafiltration processes see Zeman, L.J., Zydney, A.L., *Microfiltration and Ultrafiltration: Principles and Applications,* Marcel Dekker, Inc. Cap. 5, 7 and 8, 1996.

### BRIEF DESCRIPTION OF THE FIGURES

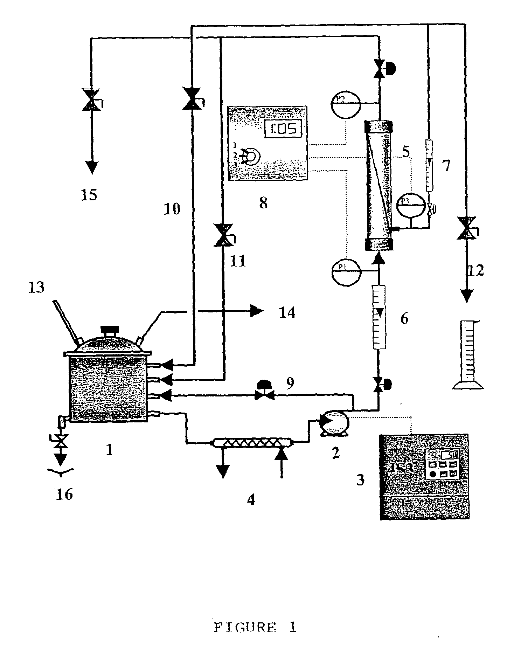

Figure 1 shows a suitable microfiltration or ultrafiltration system to perform the polyether polyol purification process of the invention.

### DETAILED DESCRIPTION OF THE INVENTION

The invention provides a process to produce a substantially pure alkylene oxide polyether polyol, by purifying a crude alkylene oxide polyether polyol produced by catalysis with a DMC catalyst, which consists of subjecting said crude alkylene oxide polyether polyol to a microfiltration or ultrafiltration process.

More specifically, the invention provides a process to purify a crude alkylene oxide polyether polyol, produced by catalysis with a DMC catalyst, which consists of subjecting said crude alkylene oxide polyether polyol to a filtration process through a microfiltration membrane or through an ultrafiltration membrane.

The crude polyether polyols that can be purified by the process of the invention are those produced by the addition of alkylene oxides to compounds containing active hydrogens, e.g. hydroxyl groups, by catalysis with a DMC catalyst. Said polyether polyols can be prepared by any of the processes known in the state of the art that use DMC catalysts. In general, crude alkylene oxide polyether polyols produced using DMC catalysts contain residues of the DMC catalyst used. Although part of said residues can be eliminated by conventional filtration, a certain quantity remains, either finely dispersed or dissolved, in the crude polyether polyol that cannot be easily eliminated.

The number average molecular weight (Mn) of the crude polyether polyol to be purified by the process provided by this invention can vary within a wide range. In a particular embodiment, the Mn of the crude polyether polyol to be purified ranges from 1,000 to 12,000 Da. Nevertheless, the purification process of the invention can be applied to crude polyether polyols with Mn higher than 12,000 Da.

The viscosity of the crude polyether polyol to be filtered, before being subjected to the filtration process, should be equal to or less than 55 mPa.s as polyether polyols with higher viscosities obstruct the membranes. If the viscosity of said crude polyether polyol, before being filtered, is greater than 55 mPa.s, then said polyether polyol should be treated to reduce its viscosity and maintain it within the viscosity limit indicated. In a particular embodiment, said crude polyether polyol with a viscosity higher than 55 mPa.s is heated to a temperature sufficiently high so that the viscosity, before being subjected to the filtration process, is equal to or less than 55 mPa.s. In another particular embodiment, the viscosity of a polyether polyol with a viscosity higher than 55 mPa.s can be reduced to a viscosity equal to or less than 55 mPa.s, before subjecting said polyether polyol to the filtration process, by dissolving said crude polyether polyol in an appropriate solvent. For this, a sufficient quantity of said solvent is added to said crude polyether polyol so that the viscosity of the mixture formed by the solvent and crude polyether polyol is less than or equal to 55 mPa.s. After the filtration, the solvent is eliminated. Practically any solvent in which the crude polyether polyol is soluble can be used to dilute the polyether polyol. By way of example, said solvent can be an aromatic hydrocarbon, e.g. toluene, xylene, etc., an alcohol e.g. methanol, ethanol, etc. a ketone e.g. acetone, etc. or mixtures thereof. In a particular embodiment, the solvent used is methanol, which is added to the polyether polyol whose viscosity one wants to reduce in a quantity of weight equal to that of the polyether polyol [methanol: crude polyether polyol ratio of 1:1 in weight] and, after filtration, the methanol is eliminated by vacuum distillation (Example 9). This alternative is particularly useful when the crude polyether polyol to be purified has a high Mn, e.g. in the order of 12,000 Da, and when the desired viscosity is not reached by simply heating the polyether polyol to an acceptable temperature.

Practically any membrane of those typically used in microfiltration or ultrafiltration processes can be used to put the polyether polyol purification process provided by this invention into practice, e.g. membranes of a ceramic nature, of polyvinylidene fluoride (PVDF) etc. In a particular embodiment, the microfiltration membrane is a ceramic membrane with a cut-off between 0.14 µm and 1.4 µm. In another particular embodiment, the ultrafiltration membrane is a membrane with a cut-off between 15,000 Da and 300,000 Da.

The purification process, using microfiltration or ultrafiltration, of polyether polyols provided by this invention can be performed in the presence or absence of filter and/or absorbent aids. Nevertheless, in a particular embodiment, said microfiltration or ultrafiltration is carried out in the absence of filtration and/or absorbent aids.

The process to purify polyether polyols provided by this invention permits substantially eliminating (i.e. completely, or a large part of) the possible residues from DMC catalysts present in the crude polyether polyol thus treated and produces a substantially pure polyether polyol, with a low content in DMC catalyst residues and high transparency. Said process constitutes a reliable, highly efficient and reproducible process to purify polyether polyols produced by catalysis with DMC catalysts. Therefore, in another aspect, the invention provides a process to produce a substantially pure alkylene oxide polyether polyol which consists of purifying the crude alkylene oxide polyether polyol, produced by catalysis with a DMC catalyst, using microfiltration or ultrafiltration.

The process to purify polyether polyols provided by this invention permits separating DMC catalyst residues at room temperature, which cannot be attained with typical separation processes and, consequently, with less energy consumption, at the same time as avoiding the appearance of chemical and thermal changes produced in conventional separation processes. Additionally, the DMC catalyst residues can be recycled which permits recovering said catalysts. The process provided by this invention further means a saving in costs and treatments due to the fact that it does not require either adding chemical reagents or performing several stages.

The process to purify polyether polyols provided by this invention can be carried out in any suitable system. In a particular embodiment, said process is performed in microfiltration or ultrafiltration systems such as that shown in figure 1. Briefly, the microfiltration or ultrafiltration module which contains microfiltration or ultrafiltration membrane (5) is fed from the reactor or feed tank (1), containing the crude polyether polyol. The feed stream (crude polyether polyol or solution containing it), with suitable viscosity, is drawn up using a pump (2) from the base of the feed tank, (1) which provides the necessary working pressure and makes it flow parallel to the microfiltration or ultrafiltration membrane, depending on the case, at a determined flow rate. The feed stream flows parallel to the membrane; one part of the feed stream permeates the membrane (5), producing the permeate, which comprises the purified polyether polyol, and the reject, that comprises the fraction of the feed that does not cross that membrane and contains the DMC catalyst residues. The permeate, the reject and part of the feed stream driven by the pump (2) are laterally recirculated to the feed tank (1), using the conduits (10) and (11) and the valve (9) respectively, which contributes to stirring the feed in the feed tank (1). The upper part of the feed tank (1) has several orifices to load it, take samples and install a thermometer (13) to control the temperature of the crude polyether polyol. The feed tank. (1) also has a lower outlet (16) to facilitate the tasks of washing and emptying the container. Furthermore, the facilities shown in Figure 1 comprises:
a frequency shifter (3);
a heating bath-refrigerating unit (4) comprised of a immersion thermostat, which permits thermostatting the system within a wide temperature range, during the microfiltration or ultrafiltration and washing operations.
pressure meters, duly calibrated to read the pressure (8), e.g. digital pressure meters calibrated in relative bars, at the inlet (P₁) and outlet (P₂) of the microfiltration or ultrafiltration module and also at the permeate outlet (P₃), which indicates the working pressure;
a feed stream rotameter (6), which regulates the flow of the feed to the microfiltration or ultrafiltration module; and
a permeate rotameter (7), at the outlet of the microfiltration or ultrafiltration module.

The microfiltration or ultrafiltration module can be of any appropriate material, can be equipped with a series of outlets and contains a microfiltration or ultrafiltration membrane (5) therein. In a particular embodiment the microfiltration or ultrafiltration module is of stainless steel, equipped with axial outlets, and contains a ceramic microfiltration or ultrafiltration membrane depending on the case. The permeate that crosses the membrane can be recirculated to the feed tank (1) or to a sampling system (12). The reject can be recirculated to the feed tank (1) or diverted to a system (15) to unload it or subject it to a subsequent regeneration treatment (15).

The following examples illustrate the invention and should not be considered restrictive thereof.

### EXAMPLES

To demonstrate the efficiency of the process to purify polyether polyols provided by this invention, a series of tests were performed wherein the crude (non-purified) polyether polyols stated hereunder were used, produced by the addition of propylene oxide to a polyol with a molecular weight of 400 in the presence of a DMC catalyst, such as that described in Example 6 of the North American patent 3,427,335. Said crude polyether polyols have a content of 23 ppm Zn and 4 ppm Co (determined by x-ray fluorescence (XRF).

### Polyether polyol

A: Polypropylene glycol with molecular weight 1,000 Da
B: Polypropylene glycol with molecular weight 2,000 Da
C: Polypropylene glycol with molecular weight 3,000 Da
D: Polypropylene glycol with molecular weight 4,000 Da
E: Polypropylene glycol with molecular weight 12,000 Da

To put the purification process of said polyether polyols into practice, an ultrafiltration and/or microfiltration system as described in Figure 1, was prepared, which consists of a feed tank (1); a gear pump (2); a frequency shifter (3); a heating bath-refrigerating unit (4); a microfiltration or ultrafiltration module containing the microfiltration or ultrafiltration membrane (5) depending on the case ; a feed stream rotameter (6); a permeate rotameter (7); a digital pressure reading device (8); a valve (9) to recirculate the feed stream to the feed tank (1); a conduit (10) to recirculate the retentate to the feed tank (1); a conduit (12) which permits taking samples of the permeate; a thermometer (13); a conduit (14) which permits taking samples of the feed (14); a conduit (15) which permits carrying the retentate to be emptied and/subsequently regenerated; and a conduit (16) to empty the feed tank (1).

The main characteristics of the microfiltration or ultrafiltration system used on a laboratory scale is described hereunder.:
Configuration: Open loop
pH: 1-14
Minimum temperature: 1°C
Maximum temperature of the process: 140°C
Transmembrane pressure 0-4 atm (0-4.05x10⁵ Pa)
Surface area: 0.04 m²
Cut-off (microfiltration): 0.14 µm
Cut-off (ultrafiltration): 300,000 Da.

The system shown in Figure 1 is assembled with a 5-litre reactor or feed tank (1) which is heated for the purpose of reducing the viscosity of the crude polyether polyol (feed), and, using a gear pump (2), it draws up the feed from the feed tank (1) containing the crude polyether polyol or the solution thereof and drives it to the microfiltration or ultrafiltration module which contains the corresponding membrane (5). There is a valve (9) to recirculate the feed to the feed tank (1) at the pump outlet (2). The valves at the inlet and outlet of the microfiltration or ultrafiltration module permit controlling the working pressure for each experiment. The feed crosses the membrane (5) exiting transversally in a stream (permeate) whilst the rest crosses it longitudinally (reject). The permeate can recirculate to the feed tank (1) or a sampling system (12), through the conduit (11) contributing, in this manner, to the stirring of the feed tank (1) or, instead, it can be diverted to a system to empty and/or subsequently regenerate it by valves which equip the installation with high flexibility. The metal content of the permeate is analyzed with the aim of determining the purity of the polyether polyol.

### A) MICROFILTRATION

### EXAMPLE 1

In the reactor of the installation shown in Figure 1, 3 kg of polyether polyol A are loaded, heated to 100°C with the aim of reducing the viscosity to 10 mPa.s and it is passed through a microfiltration membrane whose "cut-off" was 0.14 µm [Carbosep^{®} (support C; TiO₂-ZrO₂ mineral membrane), Tec-Sep, France].

The outlet permeate was analyzed after 10, 20 and 40 minutes elution, measuring the Zn and Co concentration using XRF.

### EXAMPLES 2-4

These examples were carried out following the process described in Example 1 but replacing polyether polyol A by polyether polyols B (Example 2), C (Example 3) and D (Example 4).

The results of the analyses of the purified polyether polyols produced in Examples 1- 4 are shown in Table 1.

**Table 1.**

| **Analysis of purified polyether polyols (Examples 1-4)** | | | | |
|---|---|---|---|---|
| **Example** | **POLYETHER POLYOL** | **Time (min)** | **Zn (ppm)** | **Co (ppm)** |
| Example 1 | A | 10 | 3.1 | 0 |
| Example 1 | A | 20 | 2.9 | 0 |
| Example 1 | A | 40 | 2.9 | 0 |
| Example 2 | B | 10 | 3.0 | 0 |
| Example 2 | B | 20 | 2.9 | 0 |
| Example 2 | B | 40 | 2.9 | 0 |
| Example 3 | C | 10 | 3.3 | 0 |
| Example 3 | C | 20 | 3.0 | 0 |
| Example 3 | C | 40 | 3.0 | 0 |
| Example 4 | D | 10 | 3.2 | 0 |
| Example 4 | D | 20 | 3.0 | 0 |
| Example 4 | D | 40 | 3.0 | 0 |

### A) ULTRAFILTRATION

### EXAMPLE 5

In the reactor of the installation shown in Figure 1, 3 kg of polyether polyol A are loaded, heated to 100°C with the aim of reducing the viscosity to 10.5 mPa.s and it is passed through an ultrafiltration membrane whose "cut-off" was 300,000 Da [Carbosep^{®} (support C; TiO₂-ZrO₂ mineral membrane), Tec-Sep, France].

The outlet permeate was analyzed after 10, 20 and 40 minutes elution, measuring the Zn and Co concentration using XRF.

### EXAMPLES 6-8

These examples were carried out following the process described in Example 1 but replacing polyether polyol A by polyether polyol B (Example 6), C (Example 7) and D (Example 8). The viscosity of the polyether polyol reached in each case after heating the corresponding crude polyether polyol is indicated in Table 2.

### EXAMPLE 9

In the reactor of the installation shown in Figure 1, 3 kg of polyether polyol (propylene glycol with molecular weight 12,000 Da),are loaded, heated to 100°C with the aim of reducing the viscosity and passed through an ultrafiltration membrane whose cut-off was 300,000 Da [Carbosep^{®} (support C; TiO₂-ZrO₂ mineral membrane), Tec-Sep, France].

In this case, due to the high viscosity of polyether polyol E (320 mPa.s), the heating of the polyether polyol was not sufficient to reduce the viscosity to a value less than or equal to 55 mPa.s and an obstruction was produced in the ultrafiltration membrane. For this reason, polyether polyol E was diluted with methanol in a proportion 1:1 (polyether polyol E: methanol) in weight, carrying out the test again at 25°C as the viscosity of the mixture formed by polyether polyol E and methanol, before filtration, was 33 mPa.s. Said mixture easily crossed the ultrafiltration membrane and the outlet permeate was then analyzed after 10, 20 and 40 minutes elution, after eliminating the methanol by vacuum distillation, determining the Zn and Co concentration by XRF.

The results of the analyses of the purified polyether polyols produced in Examples 5- 9 are shown in Table 2, wherein, further, the viscosity of the polyether polyol when the process is put into practice, is indicated.

**Table 2.**

| **Analysis of purified polyether polyols (Examples 5-9)** | | | | | |
|---|---|---|---|---|---|
| **Example** | **POLYETHER POLYOL** | **Time (min)** | **Zn (ppm)** | **Co (ppm)** | **(mPa.s)** |
| Example 5 | A | 10 | 1.1 | 0 | 10.5 |
| Example 5 | A | 20 | 0.95 | 0 | 10.5 |
| Example 5 | A | 40 | 0.99 | 0 | 10.5 |
| Example 6 | B | 10 | 0.97 | 0 | 18 |
| Example 6 | B | 20 | 1.05 | 0 | 18 |
| Example 6 | B | 40 | 0.95 | 0 | 18 |
| Example 7 | C | 10 | 1.15 | 0 | 29.1 |
| Example 7 | C | 20 | 1.05 | 0 | 29.1 |
| Example 7 | C | 40 | 0.99 | 0 | 29.1 |
| Example 8 | D | 10 | 0.95 | 0 | 50.4 |
| Example 8 | D | 20 | 1.1 | 0 | 50.4 |
| Example 8 | D | 40 | 0.90 | 0 | 50.4 |
| Example 9 | E | 10 | 1.3 | 0 | 33* |
| Example 9 | E | 20 | 1.2 | 0 | 33* |
| Example 9 | E | 40 | 1.2 | 0 | 33* |

| | | | | | |
|---|---|---|---|---|---|
| * Viscosity of the mixture 1:1 in weight methanol: polyether polyol E. | | | | | |

## Claims

1. A process to directly eliminate rests of double metal cianide catalyst (DMC) from a crude alkylene oxide polyether poliol obtained by the catalytic action of said catalysts, which consists of directly subjecting the untreated crude alkylene oxide polyether polyol to a process of microfiltration or ultrafiltration using a membrane which separates using size exclusion techniques without the previous addition of any substance capable of modifiyng the chemical or physical state of said catalytic residue.

2. Process according to claim 1, wherein said crude alkylene oxide polyether polyol has, before being filtered, a viscosity equal to or less than 55 mPa.s.

3. Process according to claim 1, wherein the crude alkylene oxide polyether polyol has a viscosity greater than 55mPa.s and is subjected to a treatment to reduce its viscosity, before being subjected to the filtration process, until a value equal to or less than 55 mPa.s.

4. Process according to claim 3, wherein said treatment consists of heating a crude alkylene oxide polyether polyol with a viscosity greater than 55 mPa.s to reduce its viscosity, before being subjected to a filtration process, until a value equal to or less than 55 mPa.s.

5. Process according to claim 3, wherein said treatment consists of diluting a crude alkylene oxide polyether polyol with a viscosity greater than 55 mPa.s with sufficient quantity of a solvent so that the viscosity of the solvent-crude alkylene oxide polyether polyol mixture, before being subjected to a filtration process, is equal to or less than 55 mPa.s.

6. Process according to claim 5, wherein said solvent is selected from an aromatic hydrocarbon, an alcohol, a ketone and mixtures thereof.

7. Process according to claim 6, wherein said solvent is methanol

8. Process according to claim 1, wherein said crude alkylene oxide polyether polyol has a number average molecular weight (Mn) between 1,000 and 12,000 Da.

9. Process according to claim 1, wherein said microfiltration membrane is a ceramic microfiltration membrane with a "cut-off" between 0.14 µm and 1.4 µm.

10. Process according to claim 1, wherein said ultrafiltration membrane is a ceramic ultrafiltration membrane with a "cut-off" between 15,000 and 300,000 Da.

## Patentansprüche

1. Ein Verfahren zur unmittelbaren Entfernung von Resten eines Double Metal Cyanide (DMC) Katalysators von einem Rohalkylenoxid-Polyetherpolyol, das durch die katalytische Wirkung des besagten Katalysators gewonnen wurde, das darin besteht, dass das unbehandelte Rohalkylenoxid-Polyetherpolyol unmittelbar einem Mikrofiltrations- oder Ultrafiltrationsverfahren unterzogen wird, wobei eine Membran verwendet wird, die in Anwendung von Größenausschlusstechniken die Trennung vornimmt, ohne die vorherige Zugabe einer Substanz, die geeignet ist, den chemischen oder den physischen Zustand des besagten Katalysatorabfalls zu verändern.

2. Verfahren nach Anspruch 1, wobei das besagte Rohalkylenoxid-Polyetherpolyol, bevor es gefiltert wird, eine Viskosität von genau 55 mPa.s oder weniger aufweist.

3. Verfahren nach Anspruch 1, wobei das besagte Rohalkylenoxid-Polyetherpolyol eine Viskosität von mehr als 55 mPa.s aufweist, und einer Behandlung zur Reduzierung seiner Viskosität unterzogen wird, bevor es einem Filtrationsverfahren unterzogen wird, bis zu einem Wert von genau 55 mPa.s oder weniger.

4. Verfahren nach Anspruch 3, wobei die besagte Behandlung in der Erwärmung eines Rohalkylenoxid-Polyetherpolyol mit einer Viskosität von mehr als 55 mPa.s zur Reduzierung seiner Viskosität besteht, bevor es einem Filtrationsverfahren unterzogen wird, bis zu einem Wert von genau 55 mPa.s oder weniger.

5. Verfahren nach Anspruch 3, wobei die besagte Behandlung in der Verdünnung eines Rohalkylenoxid-Polyetherpolyol mit einer Viskosität von mehr als 55 mPa.s mit einer ausreichenden Menge eines Lösungsmittel besteht, sodass die Viskosität des flüssigen Rohalkylenoxid-Polyetherpolyol-Gemisches, bevor es einem Filtrationsverfahren unterzogen wird, genau 55 mPa.s oder weniger beträgt.

6. Verfahren nach Anspruch 5, wobei das besagte Lösungsmittel aus einem aromatischen Kohlenwasserstoff, einem Alkohol, einem Keton oder aus Gemischen daraus ausgewählt wird.

7. Verfahren nach Anspruch 6, wobei das besagte Lösungsmittel Methanol ist.

8. Verfahren nach Anspruch 1, wobei das besagte Rohalkylenoxid-Polyetherpolyolein ein Zahlenmittel der Molmasse (Mn) von zwischen 1.000 und 12.000 Da aufweist.

9. Verfahren nach Anspruch 1, wobei die besagte Mikrofiltrationsmembran eine keramische Mikrofiltrationsmembran mit einer Abscheidegrenze von zwischen 0,14 µm und 1,4 µm ist.

10. Verfahren nach Anspruch 1, wobei die besagte Ultrafiltrationsmembran eine keramische Ultrafiltrationsmembran mit einer Abscheidegrenze von zwischen 15.000 und 300.000 Da ist

## Revendications

1. Un procédé pour éliminer directement les restes de catalyseur de cyanure de métal double (DMC) d'un polyol de polyéther d'un oxyde d'alkhylène brut obtenu par l'action catalytique desdits catalyseurs, qui consiste à soumettre directement le polyol de polyéther d'un oxyde d'alkhylène brut non traité à un procédé de microfiltration ou d'ultrafiltration en utilisant une membrane qui sépare par l'utilisation de techniques d'exclusion par taille sans l'addition préalable d'aucune substance capable de modifier l'état chimique ou physique dudit résidu catalytique.

2. Procédé selon la revendication 1, dans lequel ledit polyol de polyéther d'un oxyde d'alkhylène brut possède, avant d'être filtré, une viscosité égale ou inférieure à 55 mPa.s.

3. Procédé selon la revendication 1, dans lequel le polyol de polyéther d'un oxyde d'alkhylène brut possède une viscosité supérieure à 55 mPa.s et est soumis à un traitement afin de réduire sa viscosité, avant d'être soumis au procédé de filtration, jusqu'à une valeur égale ou inférieure à 55 mPa.s.

4. Procédé selon la revendication 3, dans lequel ledit traitement consiste à chauffer un polyol de polyéther d'un oxyde d'alkhylène brut avec une viscosité supérieure à 55 mPa.s afin de réduire sa viscosité, avant d'être soumis à un procédé de filtration, jusqu'à une valeur égale ou inférieure à 55 mPa.s.

5. Procédé selon la revendication 3, dans lequel ledit traitement consiste à diluer un polyol de polyéther d'un oxyde d'alkhylène brut avec une viscosité supérieure à 55 mPa.s avec un solvant en quantité suffisante pour que la viscosité du mélange solvant - polyol de polyéther d'un oxyde d'alkhylène brut, avant d'être soumis à un procédé de filtration, soit égale ou inférieure à 55 mPa.s.

6. Procédé selon la revendication 5, dans lequel ledit solvant est choisi parmi un hydrocarbure aromatique, un alcool, une cétone et leurs mélanges.

7. Procédé selon la revendication 6, dans lequel ledit solvant est du méthanol.

8. Procédé selon la revendication 1, dans lequel ledit polyol de polyéther d'un oxyde d'alkhylène brut possède, un poids moléculaire moyen en nombre (Mn) compris entre 1 000 et 12 000 Da.

9. Procédé selon la revendication 1, dans lequel ladite membrane de microfiltration est une membrane de microfiltration en céramique avec un « seuil de coupure » compris entre 0,14 µm et 1,4 µm.

10. Procédé selon la revendication 1, dans lequel ladite membrane d'ultrafiltration est une membrane d'ultrafiltration en céramique avec un « seuil de coupure » compris entre 15 000 et 300 000 Da.
